# EUROPÄISCHE PATENTANMELDUNG

(11) **EP 2 282 285 A2**
(43) Veröffentlichungstag der Anmeldung: **09.02.2011**
(21) Anmeldenummer: 10007556.3
(22) Anmeldetag: 21.07.2010
(51) Int. Cl.: G06K 9/62, G06K 9/68

(54) **Einrichtung und Verfahren zur Transformation von Objektklassifikations-Ergebnissen**

(30) Priorität: 30.07.2009 DE 102009035377
(71) Anmelder: EADS Deutschland GmbH, 85521 Ottobrunn (DE)
(72) Erfinder: Bodenmüller, Albert, 89179 Beimerstetten (DE)
(74) Vertreter: Meel, Thomas

(57) **Zusammenfassung**

Die Erfindung betrifft eine Einrichtung zur Transformation von Objektklassifikations-Ergebnissen, mit
- einem Konvertermodul, welches das Objektklassifikationsergebnis eines ersten Sensors oder eines Klassifikators, welches in Form eines Wahrscheinlichkeitsvektors auf der Basis einer ersten Menge von Objektklassen vorliegt, in einen Ziel-Wahrscheinlichkeitsvektor, der zur Kombination mit Ausgangsdaten weiterer Sensoren oder Klassifikatoren geeignet ist, transferiert, wobei dem Ziel-Wahrscheinlichkeitsvektor eine zweite Menge von Objektklassen zugrunde liegt, und die Transformation nach einer vorgegebenen Verknüpfungsvorschrift vorgenommen wird,
- einem Konfigurationsmodul, in welches eine Konfigurationsdatei mit folgenden Informationen einlesbar ist:
○ Definition der ersten Menge von Objektklassen,
○ Definition der zweiten Menge von Objektklassen,
○ Definition der Verknüpfungsvorschrift zwischen der ersten und zweiten Menge von Objektklassen,

wobei das Konfigurationsmodul die Definition der Verknüpfungsvorschrift in eine für das Konvertermodul verarbeitbare Form wandelt und diese zusammen mit der Definition für die erste und zweite Menge von Objektklassen dem Konvertermodul zur Verfügung stellt.

## Beschreibung

Die Erfindung betrifft eine Einrichtung und ein Verfahren zur Transformation von Ergebnissen eines Klassifikators, dem eine Klassifikator-spezifische Unterscheidungsfähigkeit für spezifische Objektklassen unterliegt, in eine andere Objektklasse, die für die weitere Verarbeitung besser geeignet ist oder für die Bedürfnisse eines gewählten Fusionsprozesses notwendig ist.

Zur Erfassung von Zielobjekten innerhalb eines Überwachungsbereichs spielen insbesondere elektro-optische bildgebende Bildsensoren eine zunehmende Rolle aufgrund der Möglichkeit, durch Auswertung eines dabei gewonnenen Bildes Zielobjekte, welche mit anderen Sensoren nicht unterscheidbar sind, enger zu klassifizieren. Solche elektro-optischen Bildsensoren sind insbesondere für den sichtbaren oder den infraroten Spektralbereich ausgelegt.

Elektro-optische Bildsensoren stellen ein wichtiges Hilfsmittel zur Klassifikation von Zielen speziell im militärischen Bereich und bei hoheitlichen Aufgaben, wie z. B. polizeilicher Überwachung und Grenzsicherung dar.

Üblicherweise werden aus dem Videodatenstrom des elektro-optischen Bildsensors einzelne Bilder extrahiert und diese Bilder einer nachgeschalteten automatischen Bildauswertung (Automatic Target Recognition ATR) zugeführt. Die automatische Bildauswertung führt eine Objektdetektion und eine Klassifikation durch. Das Ergebnis der Klassifikation zur Anzeige für einen Bediener ist typischerweise das Ergebnis mit der höchsten Wahrscheinlichkeit, aber in vielen Verfahren zur automatischen Bildauswertung werden intern verschiedene Objektkategorien (Objektklassen) unterschieden und jeder dieser Objektklassen eine Wahrscheinlichkeit zugeordnet. Diese Wahrscheinlichkeitsverteilung über die von der automatischen Bildauswertung unterschiedenen Objektklassen ist ein unmittelbares Ergebnis innerhalb der automatischen Bildauswertung und kann entweder direkt oder in geeigneter Weise umgeformt in einem Fusionsprozess weiterverarbeitet werden.

Die automatische Bildauswertung, beispielsweise basierend auf einem speziell trainierten Neuronalen Netz, wird häufig mit spezifischem Bildmaterial trainiert und unterscheidet demnach diejenigen Objektklassen, mit denen es trainiert wurde. Die Bildmenge für das Training eines Neuronalen Netzes hängt einerseits von den spezifischen operationellen Erfordernissen des Einsatzzweckes, andererseits aber auch von der Verfügbarkeit und dem Umfang von entsprechendem geeignetem Bildmaterial ab. Typischerweise werden zwischen 5 und 30 verschiedene Objektklassen unterschieden.

Die hier beschriebene Erfindung geht davon aus, dass ein Klassifikator, welcher beispielhaft Teil einer automatischen Bildauswertung ist, als Ergebnis eine Wahrscheinlichkeitsverteilung der von ihm unterschiedenen Objektklassen ausgibt, die mit anderen Wahrscheinlichkeitsverteilungen anderer Klassifikatoren oder Sensoren prinzipiell kombinierbar bzw. fusionierbar ist so dass aus einer einzelnen oder fusionierten Wahrscheinlichkeitsverteilung und ggf. der Kenntnis der a priori Wahrscheinlichkeit für das Auftreten dieser Objektlassen eine a posteriori Wahrscheinlichkeitsverteilung berechnet werden kann.

Bei der Datenfusion ist zum Beispiel die sogenannte Bayes-Regel anwendbar. Bekanntermaßen sind die einzelnen absoluten Wahrscheinlichkeitswerte für einzelne Objektklassen bei der Anwendung der Bayes-Regel nicht maßgeblich, sondern die Verhältniswerte zwischen den Wahrscheinlichkeitswerten für einzelne Objektklassen untereinander.

Da aber die Objektklassen, die ein Klassifikator oder eine automatische Bildauswertung zu unterscheiden vermag, häufig nicht mit den Objektklassen, die der Fusionsprozess verwendet, übereinstimmen, so ist die Kombination/Fusion der Teilergebnisse nicht ohne geeignete Transformation in eine gemeinsame Objektklasse möglich. Die gleiche Problematik besteht bei der Kombination von Ergebnissen verschiedener Sensoren, die über eine Klassifikationseinrichtung und Ausgabe der Wahrscheinlichkeiten für die einzelnen unterschiedenen Objektklassen verfügen, wenn die Objektklassen nicht übereinstimmen.

Prinzipiell kann eine solche Transformation der Objektklassen für eine bestimmte Aufgabenstellung aufgabenspezifisch durchgeführt werden. Die zugehörige Einrichtung zur Transformation, im Folgenden auch als Adapter bezeichnet, ist also hinsichtlich der Transformation starr und unveränderlich ausgebildet.

Wenn also, wie bereits weiter vorne ausgeführt, ein Sensor oder Klassifikator für geänderte Aufgabenstellungen und damit für neue Objektklassen parametrisiert oder beispielweise das Neuronale Netz eines Klassifikator mit verändertem Bildmaterial trainiert wird und damit neue Objektklassen vom Klassifikator unterschieden werden können, oder das Neuronale Netz eines Klassifikators mit Parametern aus vorhergehenden Trainingsläufen neu konfiguriert wird, so ist der Adapter für die neue, geänderte Aufgabenstellung nicht mehr geeignet.

Der Erfindung liegt deshalb die Aufgabe zugrund, eine Einrichtung zur Transformation eines Satzes von Original-Objektklassen in einen Satz von Ziel-Objektklassen zu schaffen, die leicht an die spezifische Aufgabenstellung angepasst werden kann.

Diese Aufgabe wird mit der Einrichtung nach Anspruch 1 gelöst. Vorteilhafte Ausführungen der Erfindung sind Gegenstand von Unteransprüchen. Ein Verfahren zur Transformation unter Einsatz der Einrichtung nach Anspruch 1 ist Gegenstand von Anspruch 4.

Erfindungsgemäß ist die Einrichtung zur Transformation derart aufgebaut, dass sie mittels einer einzulesenden Konfigurationsdatei an die neue Aufgabenstellung angepasst werden kann. Bei einer Änderung der Aufgabenstellung muss die Einrichtung also nicht neu implementiert sondern lediglich neu konfiguriert werden.

Die Erfindung wird anhand konkreter Ausführungsbeispiele unter Bezugnahme auf Fig. näher erläutert. Es zeigen:
- Fig. 1: mehrere Beispiele für die Verknüpfung der Original-Objektklassen mit den Ziel-Objektklassen;
- Fig. 2: ein konkretes Beispiel für die Transformation einer Menge von Original- Objektklassen in eine Menge von Ziel-Objektklassen;
- Fig. 3: die konkrete Ausführung einer Transformationseinrichtung.

Die von einem Klassifikator ausgegebenen Wahrscheinlichkeiten für die einzelnen unterschiedenen Objektklassen lassen sich als Wahrscheinlichkeitsvektor (Likelihood Vector LV) darstellen, wobei jeder Position innerhalb des Vektors einer Objektklasse entspricht.

Wenn im Fusionsprozess andere Objektklassen unterschieden werden als die vom Klassifikator bzw. von der automatischen Bildauswertung verwendeten, so unterscheiden sich die Wahrscheinlichkeitsvektoren des Klassifikators bzw. der automatischen Bildauswertung und die des Fusionsprozesses in der Regel sowohl in der Anzahl der Elemente, wie auch in der Bedeutung der Elemente. Es ist deshalb notwendig, diesen Wahrscheinlichkeitsvektor des Klassifikatorausgangs in einen Wahrscheinlichkeitsvektor des Fusionsverfahrens zu überführen, ohne die inhaltliche Bedeutung der originalen Wahrscheinlichkeitsverteilung zu verfälschen.

Dies wird an folgendem konkreten Beispiel verdeutlicht:
Angenommen, ein Klassifikator unterscheidet die Objektklassen:
   Kriegschiff, Transportschiff, Passagierschiff, Schnellboot, U-Boot
      und gibt zu jeder dieser Objektklassen die Wahrscheinlichkeit an: p(Kriegschiff), p(Transportschiff), p(Passagierschiff), p(Schnellboot), p(U-Boot)

Das Klassifikatorergebnis lässt sich so als Wahrscheinlichkeitsvektor veranschaulichen:

| | | | | |
|---|---|---|---|---|
| p(Kriegschiff) | p(Transportschiff) | p(Passagierschiff) | p(Schnellboot) | p(U-Boot) |

Angenommen die nachfolgende Verarbeitung (z.B. das Fusionsverfahren) arbeitet mit den Objektklassen:
Flugzeugträger, Kreutzer, Zerstörer, Fregatte, Schnellboot, Tanker, Hilfsschiff, Containerschiff, Fähre, Patrouillenboot, Landeboot, U-Boot,
und erwartet für die Weiterverarbeitung für diese Objektklassen die entsprechende Wahrscheinlichkeitsverteilung, hier als Wahrscheinlichkeitsvektor dargestellt:

| | | | | | | | | | |
|---|---|---|---|---|---|---|---|---|---|
| P(Flz-Träger) | P(Kreutzer) | P(Zerstörer) | P(Fregatte) | P(Schnellboot) | P(Tanker | ... | P(Patrouillenboot) | P(Landeboot) | P(Uboot) |

Dieses Beispiel verdeutlicht, dass der als Klassifikatorergebnis vorliegende Vektor nicht in der originalen Form weiterverarbeitet werden kann. Die benötigten Objektklassen der Zielmenge (z.B. Kreutzer, Zerstörer, Fregatte) sind teilweise Verfeinerungen der gröberen Objektklassen der Klassifikatorergebnismenge (z.B. Kriegsschiff), andere Elemente der Zielmenge sind durch die Objektklassen der Klassifikatorergebnismenge überhaupt nicht berücksichtigt (z.B. Tanker), wiederum für andere entsprechen sich unmittelbar (z.B. U-Boot).

Die Wahrscheinlichkeitsverteilung des Klassifikatorergebnisses muss also in eine Wahrscheinlichkeitsverteilung der Zielmenge transformiert werden, wobei der originäre Informationsinhalt beibehalten werden muss.

Ziel des im Folgenden beschriebenen beispielhaften Verfahrens ist es, die Relation zwischen den Wahrscheinlichkeiten von 2 verschiedenen Objektklassen jeweils beizubehalten, so dass bei Anwendung der Bayes-Regel keine Verfälschung des Ergebnisses auftritt.

### 1. Schritt

Als erster Schritt muss eine "Abbildungvorschrift" vorhanden sein, aus welcher ersichtlich ist, wie die Verbindung zwischen den Elementen der Originalmenge und den Elementen der Zielmenge ist.

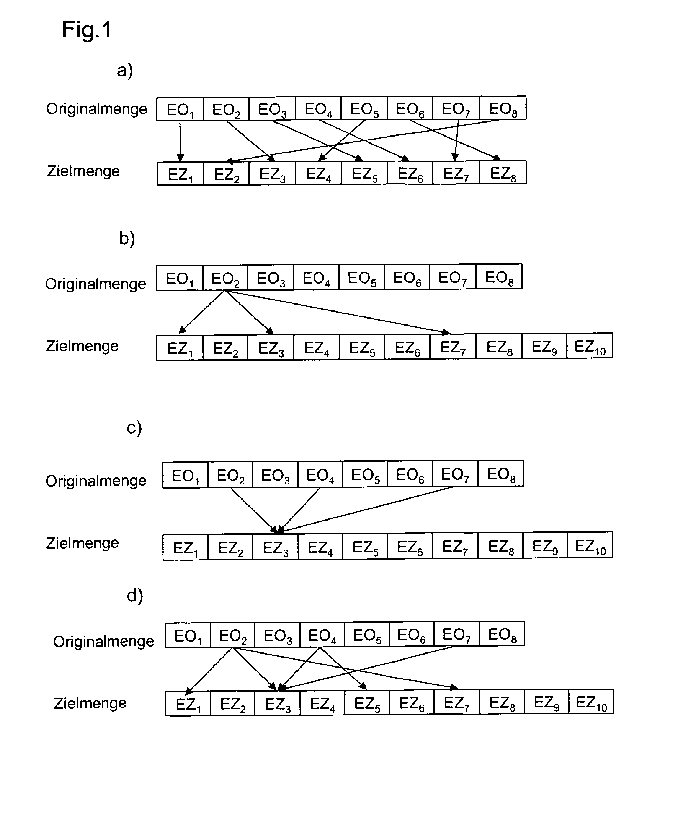

Praktischerweise unterscheidet die Abbildungvorschrift folgende 4 Beziehungen:
Fall a) 1 : 1 Beziehung (Fig. 1 a)
   → es gibt für ein Element der Originalmenge genau ein korrespondierendes Element der Zielmenge.
Fall b) 1 : n Beziehung (Fig. 1 b)
   → es gibt für ein Element der Originalmenge in der Zielmenge mehr als ein korrespondierendes Element. Die korrespondierenden Elemente der Zielmenge stellen eine Verfeinerung des Elements der Originalmenge dar.
Fall c) n : 1 Beziehung (Fig. 1 c)
   → es gibt für mehrere Elemente der Originalmenge in der Zielmenge genau ein korrespondierendes Element. Das korrespondierende Element der Zielmenge stellt eine Zusammenfassung der Elemente der Originalmenge dar.
Fall d) n : m Beziehung (Fig. 1d)
   → es gibt für ein Element der Originalmenge mehrere korrespondierende Elemente in der Zielmenge; darüber hinaus repräsentiert ein Element der Zielmenge mehr als ein Element der Originalmenge. In diesem Fall liegt eine komplexe Verteilungsstruktur vor, der jedoch durch eine Kombination der oben genannten Fälle b) und c) beschrieben werden kann.

### 2. Schritt

Im zweiten Schritt werden anhand der Beziehungen der Verknüpfungsvorschrift die ursprünglichen Wahrscheinlichkeiten, die den Elementen der Originalmenge zugeordnet sind, in eine neue Wahrscheinlichkeitsverteilung der Zielmenge transformiert.

Um die maßgeblichen Relationen zwischen den Elementen der Originalmenge des Wahrscheinlichkeitsvektors LV_{Original} bei der Transformation zu erhalten, ist folgende Transformationsvorschrift zweckmäßig:

Für jedes Element des originalen Wahrscheinlichkeitsvektors LV_{Original} wird bestimmt, ob es sich um den Fall a), b) oder c) handelt und entsprechend folgende Aktion durchgeführt:
im Fall a) 1 : 1 Beziehung
   Der Wert des originalen Wahrscheinlichkeitsvektors LV_{Original} wird für das korrespondierende Element im Ziel-Wahrscheinlichkeitsvektor LV_{Ziel} übernommen.
   Element LV_{Ziel} := Element LV_{Original}
im Fall b) 1 : n Beziehung
   Der Wert des originalen Wahrscheinlichkeitsvektors LV_{Original} wird für alle im Ziel-Wahrscheinlichkeitsvektor LV_{Ziel} korrepondierende Elemente übernommen.
   alle korrespondierenden Elemente LV_{Ziel} := Element LV_{Original}
im Fall c) n : 1 Beziehung
   Das Element im Ziel-Wahrscheinlichkeitsvektor LV_{Ziel} ist die Summe aller korrespondierenden Elemente des originalen Wahrscheinlichkeitsvektors LV_{Original}.
   Element LV_{Ziel} := Σ (korrespondierende Elemente LV_{Original})

Da der Fall d) n:m Beziehung sich in die Fälle b) und c) aufteilen lässt, kann Fall d) durch die Fälle b) und c) abgedeckt werden.

Für alle Elemente von LV_{Ziel}, die keine korrespondierenden Elemente im Ausgangsvektor LV_{Original} haben, kann abhängig von der spezifischen Aufgabenstellung der Wert für das Element auf null oder auf einen sehr kleinen Wert (z.B. delta = 10⁻⁵) gesetzt werden, wobei zu beachten ist, dass ein Wert von null immer einen Veto Effekt bei darauf folgenden Fusionsschritten bedeutet.

Eine weiter sinnvolle und für anderweitige Aufgabenstellungen vorteilhafte Lösung stellt die Berücksichtigung von a priori Wissen über die prinzipielle Verteilung der erwarteten Objekte der Zielklassen speziell im Fall b) dar.

Für komplexe Verteilungen, wie im Fall d), der als Sonderfall von Fällen b) und c) angesehen werden kann, stellt die Anwendung einer spezifischen Verteilung der Wahrscheinlichkeit des Elements von LV_{Original} eine besondere Möglichkeit dar, unter Anwendung von a-priori Wissen, die sonst angenommene Gleichverteilung durch eine bekannte Verteilung zu vermeiden. In diesem Fall wird die a-priori bekannte Verteilung auf die Ziel-Objekte mit der Wahrscheinlichkeit des Original-Elementes multipliziert und dieser Wert statt des Originalwertes für das Ziel-Element eingesetzt.

### 3. Schritt

Durch die erfolgten Verarbeitungsschritte ist die Summe des resultierenden Wahrscheinlichkeitsvektor LV_{Ziel} ungleich 1.0. Es ist deshalb sinnvoll, den Wahrscheinlichkeitsvektor LV_{Ziel} zu normalisieren. Dazu wird die Summe aller Elemente von LV_{Ziel} berechnet und anschließend jedes Element von LV_{Ziel} durch diesen Summenwert dividiert. Die Elemente des Ziel-Wahrscheinlichkeitsvektors LV_{Ziel} summieren sich dadurch zu 1.0 (wie im originalen Wahrscheinlichkeitsvektor LV_{Original}).

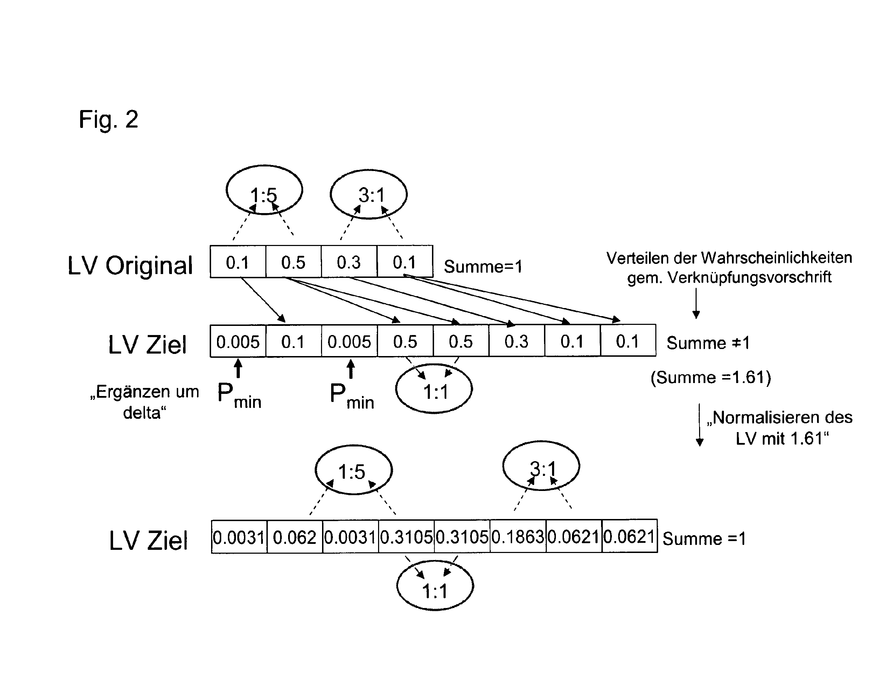

Fig. 2 zeigt beispielhaft an einem einfachen Beispiel das mittels der obigen Schritte 1 bis 3 durchgeführte Verfahren. Man erhält als Ergebnis den Wahrscheinlichkeitsvektor LV_{Ziel}, dessen Elemente aufsummiert die Wahrscheinlichkeit 1 ergeben. Wie man aus der Fig. 2 ebenfalls entnehmen kann, bleiben die maßgeblich Relationen der Elemente im Original- wie im Zielvektor erhalten, so dass die Anforderungen der Bayes-Regel erfüllt sind.

Im Folgenden wird eine erfindungsgemäße Ausführung eines Adapters zur Durchführung einer solchen Transformation beschrieben.

Diese oben dargestellte beispielhafte Ausführung der Transformation von einem spezifischen Satz von Original-Objektklassen in die benötigten Ziel-Objektklassen ist starr und Aufgaben-spezifisch. Der erfindungsgemäße Adapter kann leicht an die konkrete Aufgabenstellung angepasst werden. Für diesen Zweck wird der Adapter mittels eines Konfigurationsdatei an die neue Aufgabenstellung angepasst. Weitere Änderungen oder Implementierungsschritte sind nicht nötig.

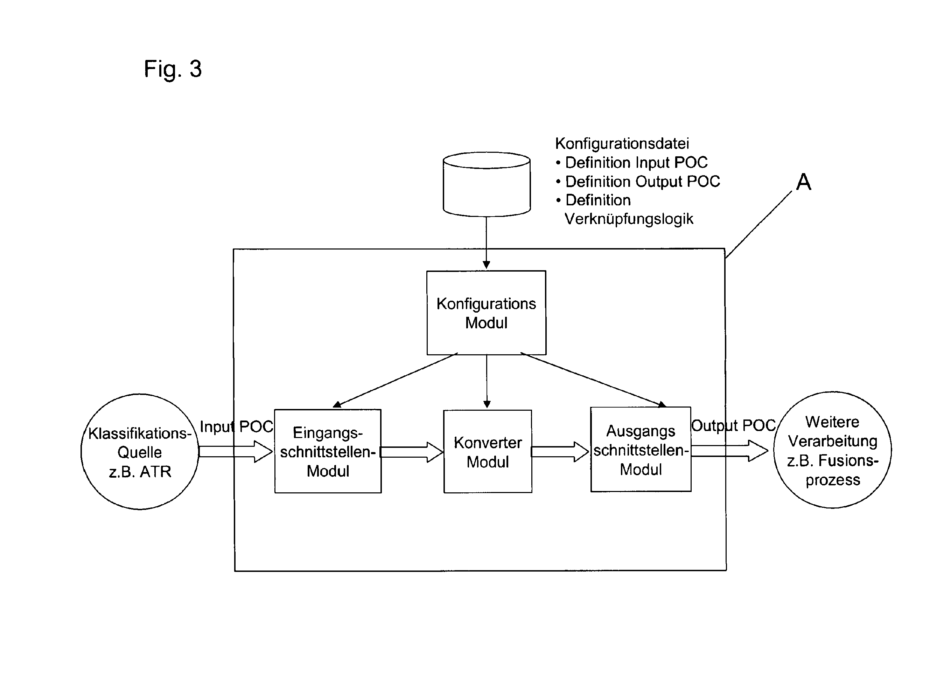

Ein Blockschaltbild einer beispielhaften Ausführung des erfindungsgemäßen Adapters A ist in Fig. 3 dargestellt. Es besteht aus den folgenden Funktionseinheiten:
○ Eingangsschnittstellenmodul
○ Ausgangsschnittstellenmodul
○ Konvertermodul
○ Konfigurationsmodul.

Die Funktionsweise des erfindungsgemäßen Adapters ist wie folgt:

Das Eingangsschnittstellenmodul nimmt die Ergebnisse des Sensors oder Klassifikators in Form bestimmter Wahrscheinlichkeiten für die Original-Objektklassen entgegen (in Fig. 3 "Input POC" genannt), bildet daraus den Wahrscheinlichkeitsvektor LV_{Original} und stellt diesen dem Konvertermodul zur Verfügung.

Das Konvertermodul liest vom Konfigurationsmodul die aktuelle Konfiguration für die Transformationsaufgabe ein. Diese besteht mindestens aus den Elementen:
○ Definition der Ausgangs-Objektklassen,
○ Definition der Ziel-Objektklassen,
○ Definition der Verknüpfungsvorschrift (d.h. die Abbildungsregeln gemäß der oben beschriebenen Fälle a) bis c)) zwischen den Elementen der Ausgangs-Objektklassen und der Ziel-Objektklassen,
○ Optional kann das Konfigurationsmodul auch a priori Daten über die generelle Verteilung der Elemente der Ziel-Objektklassen enthalten.

Das Konvertermodul führt die Transformation des Wahrscheinlichkeitsvektors LV_{Original} in den Wahrscheinlichkeitsvektor LV_{Ziel} anhand der Aufgaben-spezifischen Verknüpfungsvorschrift durch und gibt das Ergebnis an das Ausgangsschnittstellenmodul.

Das Ausgangsschnittstellenmodul nimmt die Ergebnisse (in Fig. 3 "Output POC" genannt) des Konvertermoduls entgegen und stellt das Ergebnis in Form von Wahrscheinlichkeiten für die einzelnen Zielobjektklassen der Verarbeitung einer beliebigen folgenden Verarbeitungseinheit, z.B. einem Fusionsprozess oder einem anderem System in geeigneter Form zur Verfügung.

Das Konfigurationsmodul liest die aktuelle Konfiguration des Adapters aus der Konfigurationsdatei ein, generiert daraus die Struktur des Eingangsvektors LV_{Original} für das Eingangsschnittstellenmodul, die Struktur des Ausgangsvektors LV_{Ziel} für das Ausgangsschnittstellenmodul und das Konvertermodul und generiert die Aufgaben-spezifische Verknüpfungsvorschrift, also die Abbildung von den Elementen des LV_{Original} in die Elemente des LV_{Ziel}.

Durch diesen Aufbau kann eine beliebige Transformationsaufgabe von einem Ausgangs-LV einer Klassifikationsquelle in einen Ziel-LV gelöst werden.

Die Konfigurationsdatei wird vorteilhaft als eine Datei in XML spezifiziert. Die Nutzung einer solchen Auszeichnungssprache erlaubt eine besonders geeignete Darstellung von hierarchisch strukturierten Daten und Verknüpfungen in Form einer Textdatei.
Jedoch kann die Konfigurationsdatei die oben genannten Konfigurationselemente in einer beliebigen Struktur beinhalten und ist nicht an die Auszeichnungssprache XML gebunden.

Im Folgenden wird beispielhaft die prinzipielle Struktur einer Konfigurationsdatei mittels XML angegeben.

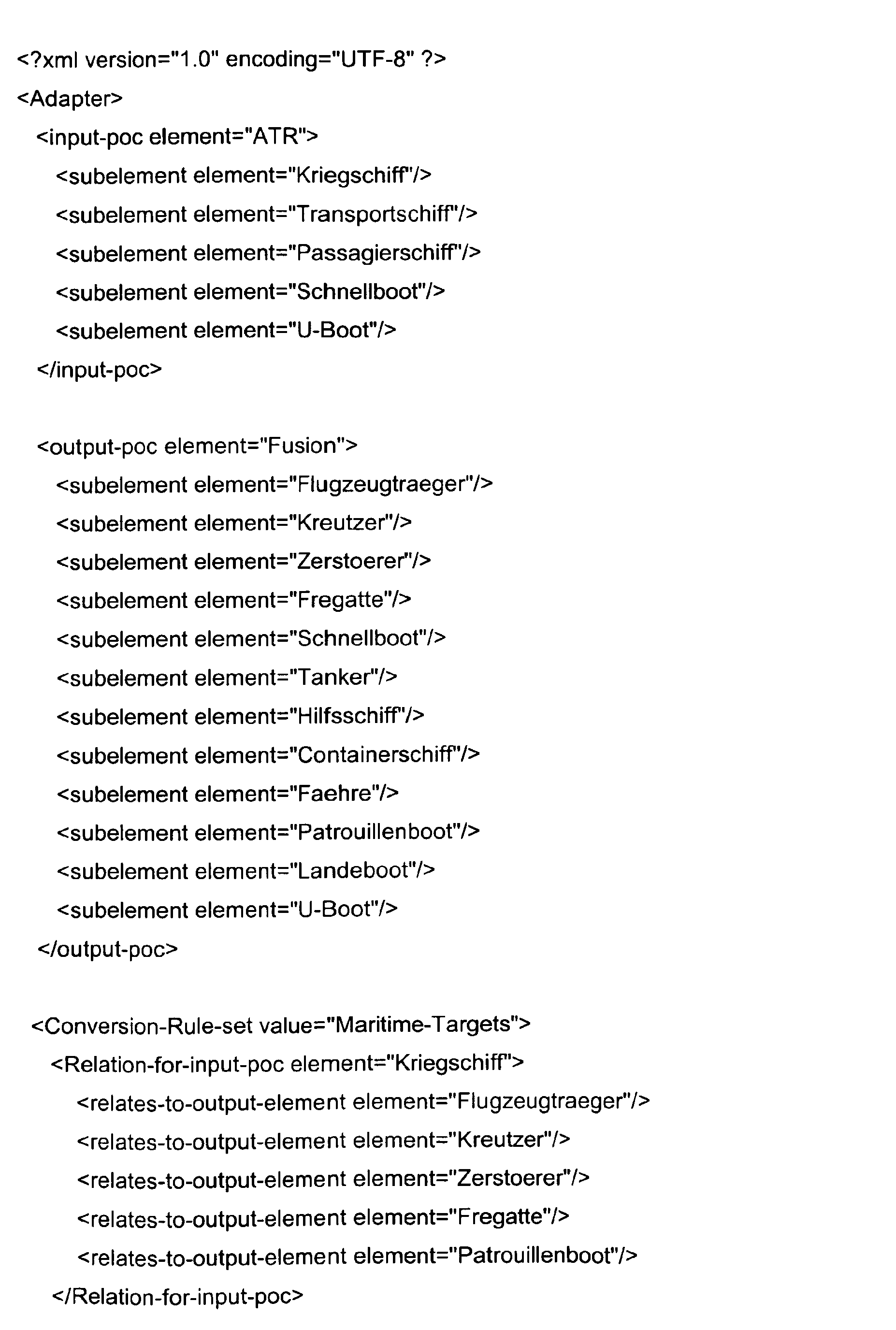

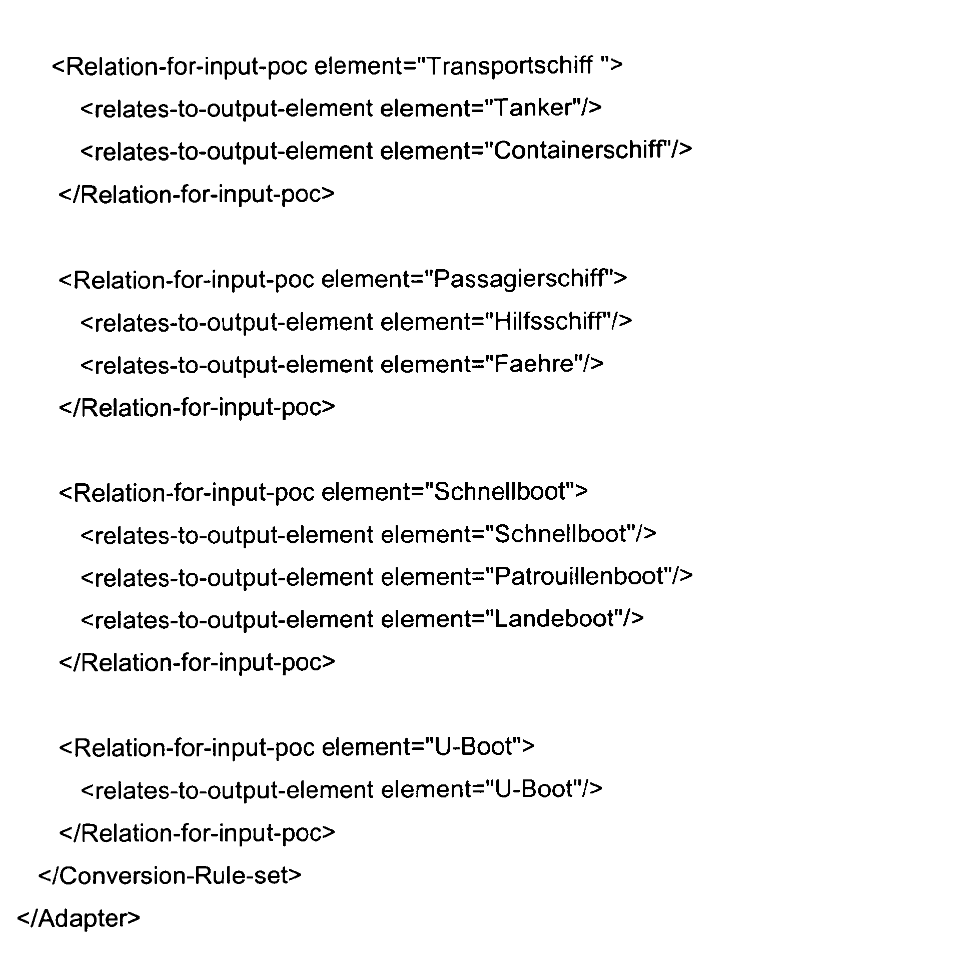

Durch die beschriebene Struktur des Adapters muss der eigentliche Transformationsprozess dem Bearbeiter, der die Konfiguration des Adapters vornehmen will, nicht offengelegt werden. Auch können Fehler beim Programmieren des Adapters ausgeschlossen werden, da der Adapter für den speziellen Einsatzfall lediglich neu konfiguriert, jedoch nicht neu programmiert werden muss.

Der Adapter ermöglicht somit die Bereitstellung von Konfigurationsdateien, die zu verschiedenen Aufgabenstellungen vorab festgelegt wurden und bei Bedarf in den Adapter eingelesen werden können.

Eine besonders vorteilhafte Nutzung des erfindungsgemäßen Adapters ist darin zu sehen, dass er dynamisch in Abhängigkeit von operationellen Randbedingungen, operationellen Tatsachen und vorgegebenen Kriterien konfiguriert werden kann Diese dynamische Konfigurierung kann vorteilhaft automatisch erfolgen.

Ein Beispiel soll dies verdeutlichen:

Wird der Adapter in einem mobilen System, z.B. Radarfahrzeug, militärischen Schiff oder Flugzeug eingesetzt, ändert sich aufgrund der Positionsänderung des mobilen Systems möglicherweise das a-priori Wissen um eine Verteilung der erwarteten Objektklassen. Andererseits können sich bei einer Positionsänderung auch die Objektklassen selbst, die in einem neuen geographischen Einsatzort anzutreffen sind, ändern, d.h. neue kommen hinzu, andere fallen weg.

Erfindungsgemäß kann der Adapter bei einer Änderung der beschriebenen Einsatzbedingungen mit einem neuen, angepassten Satz von Objektklassen konfiguriert werden. Dabei ist es sinnvoll, vorab entsprechende Konfigurationsdateien für den Adapter gespeichert zu halten, um sie dann bei Bedarf in Abhängigkeit z.B. einer neuen Position, neuen Erkenntnisses zur taktischen Lage, etc. zu aktivieren.

Die vorliegende Erfindung weist die folgenden Vorteile auf:
- ermöglicht die Transformation von Ergebnissen von Sensoren und Klassifikatoren für die Weiterverarbeitung in Prozessen, die intern mit anderen Objektklassen arbeiten;
- erlaubt das Einbinden und Fusionieren von Sensoren und Klassifikatoren in einen Fusionsprozess für solche Sensoren und Klassifikatoren, die ursprünglich nicht als Quelle dafür gedacht oder berücksichtigt wurden; ein geeigneter Fusionsprozess ist z.B. IDCP (Identification Data Combining Process), ein Fusionsverfahren, das auf der Bayes-Regel basiert und durch ein Nato Standard Agreement (STANAG 4162) für die militärische Identifizierung (und Klassifizierung) standardisiert wurde;
- ist frei konfigurierbar;
- muss nicht für jede Aufgabe neu implementiert sondern nur konfiguriert werden;
- Vorkonfiguration für bekannte Aufgabenstellungen ist möglich;
- Es lassen sich verschiedene a-priori Verteilungen von Objektklassen für unterschiedliche Einsatzzwecke oder Operationsgebiete bereithalten und über die Konfigurationsdatei automatisch in den Adapter einlesen; die a-priori Verteilung kann z.B. auch in Abhängigkeit von der Art der Weiterverwendung des Ziel-LV oder der Art des Fusionsprozesses abhängig gemacht werden;
- Die Konfiguration des Adapters kann dynamisch gemäß vorgebbarer Triggerkriterien initiiert werden.

## Patentansprüche

1. Einrichtung zur Transformation von Objektklassifikations-Ergebnissen, mit
- einem Konvertermodul, welches das Objektklassifikationsergebnis eines ersten Sensors oder eines Klassifikators, welches in Form eines Wahrscheinlichkeitsvektors auf der Basis einer ersten Menge von Objektklassen vorliegt, in einen Ziel-Wahrscheinlichkeitsvektor, der zur Kombination mit Ausgangsdaten weiterer Sensoren oder Klassifikatoren geeignet ist, transferiert, wobei dem Ziel-Wahrscheinlichkeitsvektor eine zweite Menge von Objektklassen zugrunde liegt, und die Transformation nach einer vorgegebenen Verknüpfungsvorschrift vorgenommen wird,
- einem Konfigurationsmodul, in welches eine Konfigurationsdatei mit folgenden Informationen einlesbar ist:
○ Definition der ersten Menge von Objektklassen,
○ Definition der zweiten Menge von Objektklassen,
○ Definition der Verknüpfungsvorschrift zwischen der ersten und zweiten Menge von Objektklassen,
wobei das Konfigurationsmodul die Definition der Verknüpfungsvorschrift in eine für das Konvertermodul verarbeitbare Form wandelt und diese zusammen mit der Definition für die erste und zweite Menge von Objektklassen dem Konvertermodul zur Verfügung stellt.

2. Einrichtung nach Anspruch 1, **dadurch gekennzeichnet, dass** die Konfigurationsdatei in Form einer XML-Datei vorliegt.

3. Einrichtung nach Anspruch 1 oder 2, **dadurch gekennzeichnet, dass** die Konfigurationsdatei a priori Wahrscheinlichkeiten über die Verteilung der Objektklassen der zweiten Menge enthält, welche das Konfigurationsmodul dem Konvertermodul zur Verfügung stellt.

4. Verfahren zur Transformation von Objektklassifikations-Ergebnissen mit der Einrichtung nach Patentanspruch 1, **dadurch gekennzeichnet, dass** die Einrichtung in Abhängigkeit von vorgegebenen einsatzbezogenen Kriterien konfiguriert wird, in dem aus mehreren gespeicherten Konfigurationsdateien unter Anwendung der einsatzbezogenen Kriterien eine Auswahl getroffen und die ausgewählte Konfigurationsdatei in die Einrichtung eingelesen wird und die Transformation von Objektklassifikations-Ergebnissen in der Einrichtung auf der Basis der ausgewählten Konfigurationsdatei durchgeführt wird.
